# EUROPEAN PATENT SPECIFICATION

(11) **EP 4 673 504 B1**
(45) Date of publication and mention of the grant of the patent: **13.05.2026**
(21) Application number: 25722623.3
(22) Date of filing: 30.04.2025
(51) Int. Cl.: C08L 67/02

(54) **THERMOPLASTIC MOLDING COMPOSITIONS FOR EXTRUSION WITH HIGH MELT STABILITY**
THERMOPLASTISCHE FORMMASSEN FÜR EXTRUSION MIT HOHER SCHMELZESTABILITÄT
COMPOSITIONS DE MOULAGE THERMOPLASTIQUES POUR EXTRUSION À HAUTE STABILITÉ À L'ÉTAT FONDU

(30) Priority: 08.05.2024 EP 24174866
(43) Date of publication of application: 07.01.2026
(73) Proprietor: BASF SE, 67056 Ludwigshafen (DE)
(72) Inventor: RICHTER, Florian, 67056 Ludwigshafen am Rhein (DE); KRAUSS, Gert, 67056 Ludwigshafen am Rhein (DE); LEHENMEIER, Maximilian, 67056 Ludwigshafen am Rhein (DE)
(74) Representative: BASF IP Association
(86) International application number: PCT/EP2025/061836
(87) International publication number: WO 2025/233198

(56) References cited:
- EP-B1- 3 004 242
- WO-A1-2011/110750

## Description

The present invention relates to thermoplastic molding compositions based on semi-aromatic polyesters, which are particularly suitable for extrusion coating processes, especially on paper substrates. The invention further relates to molded articles and films comprising the thermoplastic molding, in particular to coated articles. In a further aspect, the invention relates to processes for producing the thermoplastic molding composition and to extrusion processes using the thermoplastic molding compositions. The invention further relates to packaging materials comprising the coated articles coated with the thermoplastic molding compositions according to the invention.

Extrusion coating with polymers is a widely practiced technique that involves applying a thin layer of a polymeric material to various substrates such as paper, paperboard, fabrics, and metal foils. During extrusion coating, a molten polymeric material is extruded through a flat die, resulting in a film having a thickness of only a few micrometers. This film is then coated onto a substrate and cooled, allowing the polymeric material to adhere to the surface of the substrate.

For the extrusion coating process, the polymeric material used should possess a good combination of flowability, melt stability and viscosity. The polymeric material should have good melt flow properties, allowing it to be easily extruded through the flat die. Additionally, it should exhibit sufficient adhesion properties to ensure proper bonding to the substrate surface. Sufficient melt stability is required to achieve a thin and uniform coating on the substrate and a stable production process.

Polyesters exhibit a good combination of properties as barrier coatings, such as a high moisture and oxygen barrier, combined with good grease and oil barrier and resistance. Commercial thermoplastic polyesters, such as polyethylene terephthalate (PET) or polybutylene terephthalate (PBT), are also highly temperature stable. The coated articles using these polymers can therefore be used in high temperature applications.

However, polyesters, such as PET and PBT, exhibit several drawbacks in the extrusion coating process, such as a low melt stability during film extrusion, which leads to an unstable melt curtain during the extrusion process and the so-called "edge-waving" (i.e., the outer edges of the extruded films are wavy and no constant coating width is achieved). Therefore, those polymers can only be coated onto the substrate at low velocities. In addition, the adhesion of those polyesters, especially on paper and paperboard, is very low, in particular at high processing speeds (i.e. high substrate velocities). Further problems that may occur during the coating process is the so-called "neck-in", an effect in which the width of the product film becomes substantially narrower than the width of the die outlet.

WO 2011/110750 discloses to a heat-sealable biodegradable packaging material comprising a fiber substrate, which is coated with a polymeric layer, which contains polylactide and a biodegradable polyester, by extrusion or coextrusion. Small amounts of acrylic copolymers can be blended into the polymeric layer to improve the adhesion to the substrate. The production speed of the coating process is not addressed in WO 2011/110750.

JP5995471 describes a laminate on a paper base material of PBT containing 0.1 to 0.7 wt.-% of an organic compound having at least two epoxy groups in one molecule. The laminate exhibits reduced neck-in during processing. Surface adhesion is not addressed in JP5995471.

WO 2005/100015 discloses lamination processes using an olefinic copolymer to provide improved adhesion of a foil to thermoplastic compositions. The disclosed olefinic copolymers can for example be ethylene/methacrylate copolymers or ethylene/acrylic acid copolymers. In contrast to the present invention, the disclosed articles are multilayer structures and not monolayer coatings, where the olefinic copolymers are laminated as a separate layer.

US 7,507,473 discloses a coated paper article containing a primer to enhanced adhesion of polyethylene terephthalate to the paperboard. The primer used for adhesion enhancement is an ammonium catalyzed, self-crosslinking copolymer of ethylene-vinyl acetate with N-methylol acryl amide functional groups attached to a polymer backbone that needs to be applied to the paper.

WO 2009/133016 describes two-component adhesion compositions suitable for extrusion coating on paper substrates which comprises (A) a high melt strength polypropylene and a second component (B) to increase the melt-strength and adhesion to paper board selected from the group of (i) maleic anhydride-modified polypropylene (MAPP) (ii) maleic anhydride-modified polypropylene wax (iii) polypropylene homopolymer with high melt flow rate or (iv) ethylene-vinyl acetate-based hot melt adhesive. The invention is limited to polypropylene and other classes of additives (B) are used to improve the properties of the composition.

Therefore, the aim of the invention was to develop thermoplastic polyester molding compositions that have a good combination of flowability, melt stability and viscosity and therefore can be easily processed in extrusion coating processes with high process speed and in addition show good adhesion to the coated substrate. The thermoplastic molding composition should form a stable melt curtain during the extrusion process and reduce the so-called "edge-waving" and "neck-in" effects, resulting from a low melt-stability.

**It** has been found that this problem can be solved by a thermoplastic molding composition (M) comprising:

| | | | |
|---|---|---|---|
| (A) | 30 to 100 wt.-% of at least one thermoplastic polymer blend (A) comprising or consisting of (based on (A)): | | |
| | (A-1) | 81.5 to 99.39 wt.-% of at least one semi-aromatic polyester (A-1); | |
| | (A-2) | 0.01 to 2 wt.-% of at least one acrylic acid polymer (A-2) composed of: | |
| | | (a-2a) | 70 to 100 wt.-%, based on (A-2), of acrylic acid (a-2a), and |
| | | (a-2b) | 0 to 30 wt.-%, based on (A-2), of at least one other ethylenically unsaturated monomer (a-2b) copolymerizable with acrylic acid, selected from the group of the mono-ethylenically unsaturated carboxylic acids; |
| | | (A-3) | 0.05 to 5 wt.-% of at least one epoxy-containing vinylaromatic copolymer (A-3); |
| | | (A-4) | 0.5 to 10 wt.-% of at least one epoxy-containing olefinic copolymer (A-4); |
| | | (A-5) | 0.05 to 1.5 wt.-% of at least one polyolefin wax (A-5) prepared by means of metallocene catalysts, where the polyolefin wax is a homopolymer of ethylene, a copolymer of ethylene with one or more 1-olefins which may be linear or branched, substituted or unsubstituted and having 3-18 carbon atoms, or a homopolymer of propylene, |
| | | | wherein the polyolefin wax (A-5) is polar modified by reacting the polyolefin wax with an *α ,β* -unsaturated carboxylic acid or a derivative thereof; |
| | | wherein the sum of the proportions of components (A-1), (A-2), (A-3), (A-4) and (A-5) add up to 100 wt.-%; | |
| | and | | |
| | (B) | 0 to 70 wt.-% of one or more further additives (B); | |

wherein the sum of the proportions of components (A) and (B) add up to 100 wt.-%.

The thermoplastic molding compositions (M) according to the invention exhibit high melt stability and reduced neck-in during extrusion, which enables an extrusion coating process at high line speeds, i.e. high speeds with which the material to be coated is conveyed along the extrusion die (high conveying speed). The compositions according to the invention furthermore show good adhesion to the substrate, particularly to paper, cardboard, and corrugated board without the need of pre-conditioning of the substrate surface e.g., by applying tie layers, glues, primers, etc.

Preferably, the thermoplastic molding composition (M) has a melt volume-flow rate (MVR), determined according to ISO 1133-1 at 250° C/2.16 kg of 1 to 100 cm³/10 min, more preferably between 1 and 20 cm³/10 min and most preferably between 2 and 10 cm³/10 min.

According to the invention, the thermoplastic molding composition (M) comprises at least 30 wt.-%, preferably 50 to 100 wt.-%, of at least one thermoplastic polymer blend (A) and up to 70 wt.-%, preferably 0 to 50 wt.-%, of further additives (B).

The least one thermoplastic polymer blend (component A) comprises or consists of (based on A):

| | |
|---|---|
| (A-1) | 81.5 to 99.39 wt.-%, preferably 87.5 to 99.33 wt.-%, for example 91.3 to 99.05 wt.-%, of the at least one semi-aromatic polyester (A-1); |
| (A-2) | 0.01 to 2 wt.-%, preferably 0.05 to 1.5 wt.-%, for example 0.05 to 1.2 wt.-%, of the at least one acrylic acid polymer (A-2); |
| (A-3) | 0.05 to 5 wt.-%, preferably 0.05 to 2.5 wt.-%, for example 0.05 to 1 wt.-%, of the at least one epoxy-containing vinylaromatic copolymer (A-3); |
| (A-4) | 0.5 to 10 wt.-%, preferably 0.5 to 7.5 wt.-%, for example 0.75 to 6 wt.-%, of the at least one epoxy-containing olefinic copolymer (A-4); |
| (A-5) | 0.05 to 1.5 wt.-%, preferably 0.07 to 1 wt.-%, for example 0.1 to 0.5 wt.-%, of the at least one polyolefin wax (A-5). |

Preferably, the thermoplastic polymer blend (A) has a melt volume-flow rate (MVR), determined according to ISO 1133-1 at 250 ° C/2.16 kg of 1 to 100 cm³/10 min, more preferably between 1 and 20 cm³/10 min and most preferably between 2 and 10 cm³/10 min.

Components (A-1), (A-2), (A-3), (A-4) and (A-5) as well as the optional component(s) B are described in further detail herein below.

### Component A-1

According to the invention, the thermoplastic polymer blend (A) comprises at least one semi-aromatic polyester (A-1). Suitable semi-aromatic polyesters (A-1) are generally based on repeating units of at least one benzenedicarboxylic acid and derivatives thereof and repeating units of at least one aliphatic dihydroxy compound.

According to the invention, the term repeating units of benzenedicarboxylic acid and derivatives thereof includes repeating units derived from benzenedicarboxylic acids, their esters, or other ester-forming derivatives. The aromatic ring may also be substituted, for example by halogen such as chlorine and bromine or by C₁-C₆-alkyl groups such as methyl, ethyl, iso- and n-propyl and n-, iso- or tert-butyl or (iso-)hexyl groups. Preferred are semi-aromatic polyesters (A-1) comprising repeating units of terephthalic acid and isophthalic acid or mixtures thereof, in particular terephtalic acid. According to one embodiment, up to 60 mol %, preferably not more than 10 mol %, of repeating units of terephthalic acid may be replaced by isophthalic acid, 2,6-naphthalenedicarboxylic acid or aliphatic or cycloaliphatic dicarboxylic acids, such as adipic acid, azelaic acid, sebacic acid, dodecanedioic acids and cyclohexanedicarboxylic acids, in particular by repeating units of isophthalic acid. Preferred semi-aromatic polyesters (A-1) are semi-aromatic polyesters having 2 to 10 carbon atoms in the diol component.

Among the repeating units derived from aliphatic dihydroxy compounds, preference is given to diols having 2 to 6 carbon atoms, in particular 1,2-ethanediol, 1,3-propanediol, 1,4-butanediol, 1,6-hexanediol, 1,4-hexanediol, 1,4-cyclohexanediol, 1,4-cyclohexanedimethanol and neopentyl glycol or mixtures thereof.

Particularly preferred semi-aromatic polyesters (A-1) include semi-aromatic polyesters deriving from alkanediols having 2 to 6 carbon atoms. Among these, particular preference is given to polyethylene terephthalate (PET), polypropylene terephthalate (PTT) and polybutylene terephthalate (PBT) or mixtures thereof. Also preferred are PET and/or PBT comprising up to 1 wt.-%, preferably up to 0.75 wt.-%, of 1,6-hexanediol and/or 2-methyl-1,5-pentanediol as further monomer units.

The melt volume-flow rate (MVR), determined according to ISO 1133-1 at 250 ° C/2.16 kg, of the semi-aromatic polyesters (A-1) is generally in the range from 5 to 120 cm³/10 min, more preferably between 5 and 20 cm³/10 min and most preferably between 5 and 12 cm³/10 min.

Especially preferred are semi-aromatic polyesters (A-1) whose carboxyl end group content is 0 to 100 mmol/kg, preferably 10 to 50 mmol/kg and in particular 15 to 40 mmol/kg of polyester. Such polyesters may be produced for example by the process of DE-A 44 01 055. The carboxyl end group content is typically determined by titration methods (for example potentiometry).

Especially preferred thermoplastic molding compositions (M) comprise as component A-1 a semi-aromatic polyester (A-1) selected from PET, PTT and PBT or a mixture of semi-aromatic polyesters (A-1) selected from PET, PTT and PBT.

The semi-aromatic polyesters (A-1) are known per se and are described in the literature. These semi-aromatic polyesters (A-1) may be produced by polycondensation reactions of benzenedicarboxylic acids, their esters, or other ester-forming derivatives with aliphatic dihydroxy compounds, in a manner known per se.

It is further also possible to employ recyclates, in particular PET recyclates (also known as scrap PET) optionally in admixture with other semi-aromatic polyesters such as PBT and/or PTT.

Recyclates are generally understood as meaning:
1) so-called "post-industrial recyclates": these are production wastes in the polycondensation or in the processing for example of sprues in injection molding, startup scrap in injection molding or extrusion or edge offcuts from extruded sheets or films.
2) so-called "post-consumer recyclate": these are plastic articles that are collected and processed by the end consumer after use. The quantitatively predominant articles are blow-molded PET bottles for mineral water, soft drinks and juices.

Both types of recyclate may be in the form of regrind or in the form of pellets. In the latter case, the raw recyclates are melted and pelletized in an extruder after separation and cleaning. This typically facilitates the handling, the pourability and the meterability for further processing steps.

Both pelletized recyclate and recyclate in the form of regrind may be used, wherein the maximum edge length should be 10 mm, preferably less than 8 mm.

Suitable semi-aromatic polyesters are commercially available from BASF SE under the tradename Ultradur^{®}, e.g., Ultradur^{®} B6550.

Component A-1 is typically present in the thermoplastic polymer blend (A) in an amount of from 81.5 to 99.39 wt.-%, preferably 87.5 to 99.33 wt.-%, in particular 91.3 to 99.05 wt.-%, based on the thermoplastic polymer blend (A).

### Component A-2

According to the invention, the thermoplastic polymer blend (A) comprises at least one at least one acrylic acid polymer as component A-2, which is composed of:

| | |
|---|---|
| (a-2a) | 70 to 100 wt.-%, preferably from 85 to 100 wt.-%, more preferably from 95 to 100 wt.-%, based on (A-2), of acrylic acid (a-2a), and |
| (a-2b) | 0 to 30 wt.-%, preferably 0 to 15 wt.-%, more preferably from 0 to 5 wt.-%, based on (A-2) of at least one other ethylenically unsaturated monomer (a-2b) copolymerizable with acrylic acid, selected from the group of the mono-ethylenically unsaturated carboxylic acids; |

wherein the sum of the proportion of constituents (a-2a) and (a-2b) add up to 100 wt.-%.

Component A-2 is typically present in the thermoplastic polymer blend (A) in an amount of from 0.01 to 2 wt.-%, preferably 0.05 to 1.5 wt.-%, in particular 0.05 to 1.2 wt.-%, based on the thermoplastic polymer blend (A).

**It** has been surprisingly found that for thermoplastic molding composition (M) comprising at least 0.01 wt.-% of component A-2, improved surface adhesion in coating applications can be achieve, while, at the same time, the speed of the coating process can be increased without negative effects such as edge-waving or defects in the coating film. However, on the other hand it has been found that amounts of more than 2 wt.-% result in a decrease in viscosity of the thermoplastic molding composition (M) and result in an increased neck-in when the composition is used in coating processes.

### Monomer (a-2a) is acrylic acid.

Preferred suitable ethylenically unsaturated monomers (a-2b) are monoethylenically unsaturated carboxylic acids such as methacrylic acid, maleic acid, fumaric acid, itaconic acid, mesaconic acid, methylenemalonic acid and citraconic acid or mixtures thereof. In a preferred embodiment, the acrylic acid polymer (A-2) comprises substantially no ethylenically unsaturated monomer (a-2b), i.e. less than 0.5 wt.-%, preferably less than 0.1 wt.-%, more preferably less than 0.01 wt.-%, based on the total weight of the acrylic acid polymer (A-2), of the ethylenically unsaturated monomer (a-2b). Accordingly, in a preferred embodiment, the acrylic acid polymer (A-2) is made of acrylic acid monomers (i.e. comprises 100 wt.-% of repeating units derived from acrylic acid).

The above mentioned acid groups-containing monomers (a-2a) and/or (a-2b) can be used in the form of the free acids or as salts, e.g. sodium -, potassium - or ammonium salts in the polymerization.

In general, the molecular weight of the acrylic acid polymers (A-2) according to the invention is in the range of from 1,000 g/mol to 100,000 g/mol (M_{w} = weight average molecular weight). Preferably, the weight average molecular weight of the acrylic acid polymer (A-2) is in the range of from 1,000 g/mol to 12,000 g/mol, preferably in the range of from 1,500 g/mol to 8,000 g/mol. Often, the weight average molecular weight of the acrylic acid polymer (A-2) is in the range of from 3,500 g/mol to 6,500 g/mol. Within these ranges, the molecular weight can be specifically adjusted by the amount of chain regulator used during the preparation of the acrylic acid polymer (A-2). The proportion of polymers with a molecular weight of < 1,000 g/mol is generally ≤ 10 wt.-%, preferably ≤ 5 wt.-%, based on the total polymer. In general, the polydispersity index of acrylic acid polymer (A-2) Mw/Mn ≤ is 2.5, preferably 1.5 to 2.5, for example, 2. Molecular weights of the acrylic acid polymer (A-2) are determined by gel permeation chromatography (GPC) on aqueous solutions of polymers buffered to pH 7 using hydroxyethyl methacrylate copolymer networks as stationary phase and sodium polyacrylate standards.

**It** has been found by the present inventors that acrylic acid polymers (A-2) which comply with these molecular weights are particularly useful and do not alter the viscosity of the thermoplastic molding composition negatively.

The K-values, determined by the Fikentscher method on a 1 wt.-% solution in demineralized water, are generally from 10 to 50, preferably from 15 to 35 and especially preferred from 20 to 30. K-values determined by the Fikentscher method are generally determined according to EN ISO 1628-1.

In particular, preferred acrylic acid polymers (A-2) have a pH value of less than 4, especially less than 3, meaning the acrylic acid polymers used are preferably only partially neutralized or not neutralized at all, meaning either free acid groups or acid groups only partially neutralized with alkali ions are present.

In order to produce low-molecular-weight polyacrylic acids, molecular-weight regulators or chain-transfer agents are added during the free-radical polymerization of acrylic acid. Said regulators must be appropriate to the polymerization initiator, and also to the polymerization process. Examples of known initiators are inorganic and organic percompounds, such as peroxodisulfates, peroxides, hydroperoxides, and peresters, azo compounds, such as 2,2' - azo-bisisobutyronitrile, and redox systems with inorganic and organic components. Regulators used often comprise inorganic sulfur compounds, such as hydrogensulfites, disulfites, and dithionites, organic sulfides, sulfoxides, sulfones, and mercapto compounds, such as mercaptoethanol, mercaptoacetic acid, and also inorganic phosphorus compounds, such as hypophosphorous acid (phosphinic acid), and salts thereof (e.g. sodium hypophosphite).

Processes to produce acrylic acid polymers (A-2) according to the invention are described, for example, in DE-A 19950941 and WO 2012/104401 A.

The acrylic acid polymers (A-2) may be used in substantially pure form, in the form of a master batch, e.g. in combination with a polyester matrix, or in the form of a solution, e.g. an aqueous solution.

### Component A-3

According to the invention, the thermoplastic polymer blend (A) comprises at least one epoxy-containing vinylaromatic copolymer (component A-3). The epoxy-containing vinylaromatic copolymer (component A-3) preferably comprises repeating units derived from vinylaromatic monomers and acrylic monomers.

Component A-3 is typically present in the thermoplastic polymer blend (A) in an amount of from 0.05 to 5 wt.-%, preferably 0.05 to 2.5 wt.-%, in particular 0.05 to 1 wt.-%, based on the thermoplastic polymer blend (A). It has been found that the claimed amount of component A-3 improves the melt-stability of the thermoplastic polymer blend (A).

The vinylaromatic monomers may preferably be selected from styrene and styrene derivatives which are substituted in the alpha, beta, ortho, meta, and/or para position with at least one alkyl group having 1 to 6 carbon atoms. Preferably, the vinylaromatic monomers may be selected from styrene and styrene derivatives, which are substituted in the alpha, and/or para position, preferably in the alpha position, with at least one alkyl group having 1 to 3 carbon atoms, preferably 1 carbon atom. Preferably, the vinylaromatic monomer is selected from styrene and alpha-methylstyrene, in particular styrene.

Examples of suitable esters include methyl, ethyl, propyl, n-butyl, i-butyl, 2-ethylhexyl, octyl and decyl acrylates/the corresponding esters of methacrylic acid. Of these, particular preference is given to methyl, ethyl, propyl, n-butyl and 2-ethylhexyl acrylate/methacrylate.

The epoxy functionality may be introduced by monomers comprising epoxy groups. Suitable monomers containing epoxy groups include glycidyl methacrylate and glycidyl acrylate. The repeating units which bear epoxy groups are preferably glycidyl (meth)acrylates. Copolymers having a glycidyl methacrylate content of greater than 20 wt.-%, more preferably greater than 30 wt.-% and even more preferably greater than 50 wt.-%, based on the of the copolymer will be found particularly advantageous.

Preferably, the epoxy-containing copolymer (component A-3) is a random or block copolymer represented by the following formula (I): 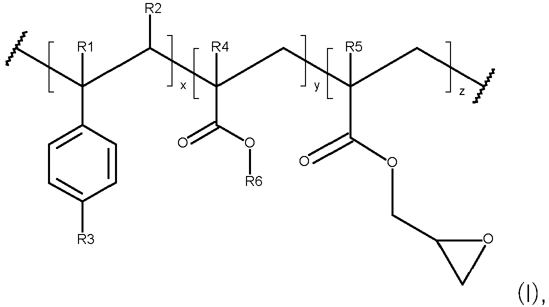 wherein
R1, R2, R3, R4, and R5 are independently selected from hydrogen atom, alkyl groups having 1 to 6 carbon atoms, preferably 1 to 3 carbon atoms;
R6 is independently selected from alkyl groups having 1 to 6 carbon atoms, preferably 1 to 3 carbon atoms; and
x, y, and z are integers from 1 to 20.
R1 is preferably selected from -H or -CH₃, preferably -H.
R2 is preferably selected from H.
R3 is preferably selected from -H or -CH₃, preferably -H.
R4 is preferably selected from -H or -CH₃.
R5 is preferably selected from -H or -CH₃.
R6 is preferably selected from -CH₃

Preferred epoxy-containing vinylaromatic copolymers (A-3) are based on styrene, acrylic ester and/or methacrylic ester, and are preferably poly(styrene-glycidylether-methyl methacrylates).

The epoxy equivalent weight (EEW) in the epoxy-containing copolymer (component A-3) is preferably in the range from 150 to 3,000 g/mol, more preferably in the range from 150 to 1500 g/mol, for example in the range from 150 to 1000 g/mol, or in the range from 150 to 750 g/mol. More preferably, the EEW is in the range of from 200 to 650 g/mol, in particular in the range from 200 to 500 g/mol. Epoxy equivalent weight (EEW) is defined as: the number of grams of epoxy-containing copolymer (component A-3) required to give 1 mole of epoxy groups and is determined according to ASTM D1652.

The weight-average molecular weight Mw of the the epoxy-containing copolymer (component A-3) is preferably in the range from 2,000 to 25,000 g/mol and particularly in the range from 3,000 to 8,000 g/mol. The number average molecular weight Mn of the polymers is preferably in the range from 400 to 6,000 g/mol and particularly in the range from 1,000 to 4,000 g/mol. The polydispersity (Q=Mw/Mn) is generally between 1.5 and 5. Molecular weights of the epoxy-containing copolymer (component A-3) are determined by gel permeation chromatography (GPC) on aqueous solutions of polymers buffered to pH 7 using hydroxyethyl methacrylate copolymer networks as stationary phase and sodium polyacrylate standards.

The epoxy-containing vinylaromatic copolymers (A-3) may be prepared by random or block copolymerization reactions of reaction mixtures comprising the monomers described above in a radical polymerization reaction, ionic polymerization reaction or catalyzed polymerization reaction.

Epoxy-containing copolymers of the abovementioned type are commercially available, for example from BASF Resins B.V. under the Joncryl^{®} ADR brand. Joncryl^{®} ADR 4468 and Joncryl^{®} ADR 4400 are particularly useful.

### Component A-4

According to the invention, the thermoplastic polymer blend (A) comprises at least one epoxy-containing olefinic copolymer (component A-4).

Preferred epoxy-containing olefinic copolymers (component A-4) include copolymers composed of the following components:

| | |
|---|---|
| (a-4a) | 40 to 99 wt.-% of at least one alpha-olefin having 2 to 8 carbon atoms, |
| (a-4b) | 0 to 45 wt.-% of a C₁-C₁₂-alkyl ester of acrylic acid or methacrylic acid or mixtures of such esters, |
| (a-4c) | 0 to 40 wt.-% of an ethylenically unsaturated C₂-C₂₀-mono- or -dicarboxylic acid or a functional derivative of such an acid, |
| (a-4d) | 0 to 40 wt.-% of an monomer comprising epoxy-groups, |
| (a-4e) | 0 to 50 wt.-% of a diene monomer, and |
| (a-4f) | 0 to 5 wt.-% of other free-radically polymerizable monomers, |

wherein components (a-4b), (a-4c) and (a-4d) sum to at least 1 to 45 wt.-% based on components (a-4a) to (a-4f).

Component A-4 is typically present in the thermoplastic polymer blend (A) in an amount of from 0.5 to 10 wt.-%, preferably 0.5 to 7.5 wt.-%, in particular 0.75 to 6 wt.-%, based on the thermoplastic polymer blend (A). It has been found that an amount of at least 0.5 wt.-% of component A-4 improves the adhesion of the thermoplastic molding composition (M) to the substrate surface. However, if the amount of component A-4 is too high, the melt-stability of the thermoplastic molding composition (M) is reduced and the processing speed has to be reduced during the extrusion coating process in order to obtain acceptable coated articles.

Examples of suitable alpha olefins include ethylene, propylene, 1-butylene, 1-pentylene, 1-hexylene, 1-heptylene, 1-octylene, 2-methylpropylene, 3-methyl-1-butylene and 3-ethyl-1-butylene, preference being given to ethylene and propylene.

Examples of suitable esters include methyl, ethyl, propyl, n-butyl, i-butyl, 2-ethylhexyl, octyl and decyl acrylates/the corresponding esters of methacrylic acid. Of these, particular preference is given to methyl, ethyl, propyl, n-butyl and 2-ethylhexyl acrylate/methacrylate.

Instead of the esters or in addition thereto, the olefin polymers may also comprise acid-functional and/or latently acid-functional monomers of ethylenically unsaturated mono- or dicarboxylic acids.

Examples of ethylenically unsaturated mono- or dicarboxylic acids include acrylic acid, methacrylic acid, tertiary alkyl esters of these acids, in particular tert-butyl acrylate, and dicarboxylic acids, such as maleic acid and fumaric acid, or derivatives of these acids and also the monoesters thereof.

"Latently acid-functional monomers" is to be understood as meaning compounds which form free acid groups under the polymerization conditions or during incorporation of the olefin polymers into the molding materials. Examples thereof include anhydrides of dicarboxylic acids having 2 to 20 carbon atoms, in particular maleic anhydride and tertiary C₁-C₁₂ alkyl esters of the abovementioned acids, in particular tert-butyl acrylate and tert-butyl methacrylate.

Suitable monomers containing epoxy groups include glycidyl methacrylate and glycidyl acrylate.

Suitable diene monomers include, for example, conjugated dienes having 4 to 8 carbon atoms, such as isoprene and butadiene, nonconjugated dienes having 5 to 25 carbon atoms, such as penta-1,4-diene, hexa-1,4-diene, hexa-1,5-diene, 2,5-dimethylhexa-1,5-diene and octa-1,4-diene, cyclic dienes, such as cyclopentadiene, cyclohexadienes, cyclooctadienes and dicyclopentadiene, and alkenylnorbornenes, such as 5-ethylidene-2-norbornene, 5-butylidene-2-norbornene, 2-methallyl-5-norbornene, 2-isopropenyl-5-norbornene, and tricyclodienes, such as 3-methyltricyclo[5.2.1.0.2.6]-3,8-decadiene, or mixtures thereof. Preference is given to hexa-1,5-diene, 5-ethylidenenorbornene and dicyclopentadiene.

### Useful other monomers include, for example, vinyl esters and vinyl ethers.

Preferably, component A-4 is a copolymer composed of:

| | |
|---|---|
| (a-4a) | 50 to 94.8 wt.-%, preferably 55 to 79.5 wt.-% of at least one *α* -olefin with 2-8 carbon atoms, preferably ethylene, |
| (a-4b) | 5 to 40 wt.-%, preferably 20 to 40 wt.-% of a C₁-C₁₂ alkyl ester of acrylic acid or methacrylic acid or mixtures of such esters, preferably an ester of acrylic acid or methacrylic acid; |
| (a-4c) | 0.1 to 20 wt.-%, preferably 0.5-20 wt.-% of ethylenic unsaturated mono- or dicarboxylic acid or a functional derivative of such an acid, preferably acrylic acid and/or maleic anhydride; and |
| (a-4d) | 0.1 to 20 wt.-%, preferably 0.2-20 wt.-% of a monomer containing epoxy groups, preferably glycidyl acrylate and/or glycidyl methacrylate. |

Particularly suitable functionalized rubbers are random (ethylene-methyl acrylate-glycidyl methacrylate) copolymers, (ethylene-methyl methacrylate-glycidyl methacrylate) copolymers, (ethylene-methyl acrylate-glycidyl acrylate) copolymers and (ethylene-methyl methacrylate-glycidyl acrylate) copolymers. Particular preferred is a random (ethylene-methyl acrylate-glycidyl methacrylate) copolymer.

The production of the above-described polymers may be effected by processes known per se, preferably by random copolymerization under high pressure and elevated temperature. The melt flow index of the copolymers (A-4) is generally in the range from 1 to 80 g/10 min (measured at 190 ° C under a load of 2.16 kg).

Epoxy-containing copolymers of the abovementioned type are commercially available, for example from SK Functional Polymers under the Lotader^{®} brand. Lotader^{®} AX8900 is particularly useful.

### Component A-5

According to the invention, the thermoplastic polymer blend (A) comprises least one polyolefin wax (A-5) prepared by means of metallocene catalysts, where the polyolefin wax is a homopolymer of ethylene, a copolymer of ethylene with one or more 1-olefins which may be linear or branched, substituted or unsubstituted and having 3-18 carbon atoms, or a homopolymer of propylene, wherein the polyolefin wax (A-5) is polar modified by reacting the polyolefin wax with an *α* ,*β* -unsaturated carboxylic acid or a derivative thereof.

The thermoplastic molding composition (M) according to the present invention is especially characterized by the presence of component A-5 in an amount from 0.05 to 1 wt.-%, preferably from 0.07 to 0.7 wt.-%, more preferably from 0.1 to 0.5 wt.-%, based on the total weight of the molding composition, of a polyolefin wax prepared by means of metallocene catalysts, where the polyolefin wax is a homopolymer of ethylene, a copolymer of ethylene with one or more 1-olefins which may be linear or branched, substituted or unsubstituted and having 3-18 carbon atoms or a homopolymer of propylene, which is polar modified by reacting the polyolefin wax with an *α* ,*β* -unsaturated carboxylic acid or a derivative thereof.

Component A-5 employed in the described amounts improves the processing properties especially in extrusion, i.e. no or reduced deposits of additives during processing, especially no or reduced die drool is observed.

The 1-olefins may be linear or branched, substituted or unsubstituted and have 3 to 18 carbon atoms, preferably have 3 to 6 carbon atoms. Examples are propene, 1-butene, 1-hexene, 1-octene and 1-octadecene, also styrene. Preference is given to copolymers of ethylene with propene or 1-butene. The copolymers have an ethylene content of 70 to 99.9 wt.-%, preferably 80 to 99 wt.-%. If the 1-olefins are substituted, the substituent is preferably an aromatic radical, which is conjugated with the double bond of the 1-olefin.

Particularly suitable polyolefin waxes used as starting materials, i.e. which are not polar modified, are homopolymers of ethylene or a copolymers of ethylene with one or more 1-olefins preferably having a drop point, determined according to ASTM D 3954, in the range from 90 to 130 ° C, more preferably from 100 to 120 ° C, a melt viscosity at 140 ° C preferably in the range from 10 to 10,000 mPa·s, more prefer ably from 50 to 5,000 mPa·s and a density, determined according to ISO 1183, at 20 ° C preferably in the range from 0.89 to 1.05 g/cm³, more preferably from 0.91 to 0.99 g/cm³. In the case of copolymers of ethylene with one or more 1-olefins as comonomer, the comonomer units can be distributed either predominantly randomly or predominantly in blocks. In the case that the 1-olefin is propylene, the propylene sequences may be isotactic, syndiotactic or partially atactic.

Further suitable polyolefin waxes used as starting materials, i.e. which are not polar modified, are propylene homopolymers prepared using metallocene catalysts and preferably having melt viscosities, measured at 170 ° C, of from 20 to 50,000 mPa·s. The softening points (ring/bail) of such waxes are generally from 90 to 165 ° C, preferably from 90 to 145 ° C. Suitable waxes are both highly crystalline products having a high proportion of isotactic or syndiotactic structures and those having a low crystallinity and a predominantly atactic structure. The degree of crystallinity of propylene homopolymers can be varied within wide limits in a known manner by appropriate selection of the catalyst used for the polymerization and by means of the polymerization conditions.

The synthesis of the unmodified, i.e. nonpolar, starting waxes by means of catalysts of the metallocene type is known from numerous documents, for example from EP-A-0 571 882 and EP-A-0416 566.

Metallocene catalysts for preparing said starting polyolefin waxes are chiral or non-chiral transition metal compounds of the formula M¹L_{X}. The transition metal compound M¹L_{X} contains at least one central metal atom M¹ to which at least one p ligand, e.g. a cyclopentadienyl ligand, is bound. In addition, substituents, such as halogen atoms or alkyl, alkoxy or aryl groups, may be bound to the central metal atom M¹. M¹ is preferably an element of main group III, IV, V or VI of the periodic table of the Elements, e.g. Ti, Zr or Hf. For the purposes of the present invention, cyclopentadienyl ligands are unsubstituted cyclopentadienyl radicals and substituted cyclopentadienyl radicals, such as methylcyclopentadienyl, indenyl, 2-methylindenyl, 2-methyl-4-phenyl-indenyl, tetrahydroindenyl, or octahydrofluorenyl radicals. The p ligands can be bridged or unbridged, with single and multiple bridges, including bridges via ring systems, being possible.

The term metallocene also encompasses compounds having more than one metallocene fragment, known as multi-nuclear metallocenes. These can have any substitution patterns and forms of bridging. The individual metallocene fragments of such multinuclear metallocenes can be either of the same type or different from one another. Examples of such multinuclear metallocenes are described, for example, in EP-A-0 632 063.

Examples of structural formulae of metallocenes and of their activation by means of a cocatalyst are given, inter alia, in EP-A-0 571 882 and EP-A-0416 566.

The polyolefin wax is polar modified by reacting the polyolefin wax with an *α*, *β* -unsaturated carboxylic acid or a derivative thereof, preferably in the presence of free-radical formers.

Examples for suitable *α ,β* -unsaturated carboxylic acids or their derivatives are acrylic acid or methacrylic acid or their esters or amides, maleic acid, maleic anhydride, monoesters of maleic acid, e.g. monoalkyl maleates, diesters of maleic acid, e.g. dialkyl maleates, or amides of maleic acid, e.g. maleimide or N-alkyl-substituted maleimides. It is also possible to use mixtures of these compounds. Preference is given to maleic acid and its derivatives; particular preference is given to maleic anhydride. The *α ,β* -unsaturated carboxylic acid or its derivative is used in an amount, based on the starting polyolefin wax, of 0.1 to 20 wt.-%.

Suitable free-radical formers are compounds, which disintegrate into free radicals to a sufficient extent under the reaction conditions. Particularly suitable free-radical formers are organic peroxides, for example alkyl, aryl or aralkyl peroxides such as di-tert-butyl peroxide or dicumyl peroxide, peroxyesters such as tert-butyl peracetate or tert-butyl perbenzoate or hydroperoxides such as tert-butyl hydroperoxide or cumene hydroperoxide. Further possible free-radical formers are aliphatic azo compounds such as azobis-(2-methylpropionitrile) or 2,2'-azobis-(2,4-dimethylvaleronitrile). Preference is given to dialkyl peroxides, particularly preferably di-tert-butyl peroxide. The free-radical former is used in a concentration, based on the starting polyolefin wax, of 0.1 to 5 wt.-%.

The reaction of the starting polyolefin wax, with the *α ,β* -unsaturated carboxylic acid or its derivative can be carried out either continuously or batch-wise. In the batch-wise procedure, the wax is heated to a temperature above its softening point and both the *α ,β* -unsaturated carboxylic acid or its derivative and the free-radical former are introduced into the melt while stirring, either continuously over an appropriate period of time or in one or more portions, if desired under a blanket of inert gas. The reaction temperature is above the softening point of the wax, preferably from 100 to 200 ° C, particularly preferably from 130 to 180 ° C. After metering-in is complete, the mixture can be left to react further at the same temperature or a different temperature, if desired after addition of a further amount of free-radical former. Volatile components formed during the reaction or excess volatile starting components can, for example, be distilled off under reduced pressure or be removed by stripping with inert gas.

The polar waxes, i.e. component A-5 of the present invention, preferably have an acid or saponification number of from 0.5 to 120 mg KOH/g, more preferably from 1 to 100 mg KOH/g, most preferably 5 to 80 mg KOH/g (determined according to DIN EN ISO 2114), a preferred melt viscosity of 20 to 50,000 mPa·s, more preferably 25 to 5,000 mPa·s, most preferably 30 to 500 mPa·s, and a preferred softening point (ring/bail) of 90 to 165 ° C, preferably 90 to 145 ° C.

Preferably, component A-5 is a homopolymer of ethylene or a copolymer of ethylene with one or more 1-olefins which may be linear or branched, substituted or unsubstituted and having 3 to 18 carbon atoms, which is polar modified by reacting the polyolefin wax with maleic anhydride.

More preferably a homopolymer of ethylene, which is polar modified by reacting the polyolefin wax with maleic anhydride.

Products of this type are obtainable commercially by way of example from Clariant Plastics & Coatings (Deutschland) GmbH as Licocene^{®} PE MA 4221 fine grain.

### Component B

According to the invention, the thermoplastic molding composition (M) may further comprise 0 to 70 wt.-%, based on 100 wt.-% of the sum of components A and B, of further additives distinct form components (A-1) to (A-5) as component B. In particular, the thermoplastic molding composition (M) may comprise up to 50 wt.-%, of further additives and processing aids distinct from components (A-1) to (B-1) based on 100 wt.-% of the sum of components A and B.

In general, all known additives and processing aids typically used in polyester-based thermoplastic molding compositions are suitable to be used as component B. These are generally known to the skilled person. As component B the thermoplastic molding composition (M) according to the invention may comprise customary processing aids such as stabilizers, oxidation retarders, agents to counteract thermal degradation and ultraviolet light degradation, glidants and mold release agents, nucleating agents such as sodium phenylphosphinate, aluminium oxide, silicon dioxide, nylon 22 and colorants such as dyes and pigments or plasticizers etc. Also other polymers, in particular impact-modifiers or polyesters different from component A-1 may be included.

According to one embodiment of the invention, the thermoplastic molding composition (M) may optionally comprise at least one epoxidized oil or oil mixture as component (B-1) to further improve the processabiltiy of the thermoplastic molding composition (M). In the epoxidized oil or oil mixture the at least partially unsaturated fatty acids in the parent fatty acid esters of the oil or oil mixture have from 12 to 22 carbon atoms. Such oils as starting materials for the epoxidation can be of petrochemical, vegetable or animal origin and can be present both in pure form and mixed with one another and accordingly added to the thermoplastic polymer blend (A) as pure epoxidized oils or else mixtures of such epoxidized oils.

Various oils and mixtures thereof which can be subjected to epoxidation are described in US 9,034,965 B2, in column 2, line 33, to column 3, line 12, which are also suitable to be used as component (B-1) according to the invention.

Epoxidized oils suitable as components (B-1) include epoxidized oils based on vegetable oils selected from the group consisting of soybean oil, linseed oil, rapeseed oil, castor oil, cottonseed oil, olive oil, peanut oil, sunflower oil, corn oil and hemp oil and are preferably used. Epoxidized oils based on vegetable oils selected from the group consisting of soybean oil, linseed oil, rapeseed oil and castor oil are particularly suitable.

The epoxidized oils (B-1) and mixtures thereof are typically employed in amounts of 0 to 5 wt.-% based on the thermoplastic polymer blend (A), often in amounts of from 0 to 3 wt.-%.

The thermoplastic molding composition (M) according to the invention may comprise 0 to 5 wt.-% of talc as the preferred nucleating agent B. This is preferably employed in amounts of 0.001 to 4 wt.-%, in particular of 0.01 to 1 wt.-%.

Talc is a hydrated magnesium silicate in which other trace elements such as for example Mn, Ti, Cr, Ni, Na and K may be present and OH groups may be replaced by fluoride.

It is particularly preferable to employ talc, which, to an extent of 100%, has particle sizes of less than 20 *µ* m. The particle size distribution is typically determined by sedimentation analysis and is preferably <20 *µ* m: 100 wt.-%, <10 *µ* m: 99 wt.-%, <5 *µ* m: 85 wt.-%, <3 *µ* m: 60 wt.-%, <2 *µ* m: 43 wt.-%. Such products are commercially available as Micro-Talc I.T. extra.

Examples of oxidation retarders and heat stabilizers are sterically hindered phenols and/or phosphites, hydroquinones, aromatic secondary amines such as diphenylamines, various substituted representatives of these groups and mixtures thereof in concentrations of up to 1 wt.-% based on the weight of the thermoplastic molding materials.

Examples of UV stabilizers, which are generally employed in amounts of up to 2 wt.-% based on the molding material, include various substituted resorcinols, salicylates, benzotriazoles and benzophenones.

Inorganic and organic pigments and dyes such as nigrosin and anthraquinones may be added as colorants. Particularly suitable colorants are recited in EP 1 722 984 B1, EP 1 353 986 B1 or DE 10054859 A1 for example.

As additives of components B ("lubricants, glidants and mold release agents") the thermoplastic molding composition (M) according to the invention may comprise esters or amides of saturated or unsaturated aliphatic carboxylic acids having 10 to 40, preferably 16 to 22, carbon atoms with aliphatic saturated alcohols or amines having 2 to 40, preferably 2 to 6, carbon atoms.

The carboxylic acids may be mono- or dibasic. Examples include pelargonic acid, palmitic acid, lauric acid, margaric acid, dodecanedioic acid, behenic acid, and particularly preferably stearic acid, capric acid and montanic acid (mixture of fatty acids having from 30 to 40 carbon atoms).

The aliphatic alcohols may be mono- to tetrahydric. Examples of alcohols include n-butanol, n-octanol, stearyl alcohol, ethylene glycol, propylene glycol, neopentyl glycol, and pentaerythritol, preference being given here to glycerol and pentaerythritol.

The aliphatic amines may be mono- to trifunctional. Examples thereof are stearylamine, ethylenediamine, propylenediamine, hexamethylenediamine, and di(6-aminohexyl)amine, wherein ethylenediamine and hexamethylenediamine are particularly preferred. Preferred esters or amides are correspondingly glyceryl distearate, glyceryl tristearate, ethylenediamine distearate, glyceryl monopalmitate, glyceryl trilaurate, glyceryl monobehenate and pentaerythrityl tetrastearate.

It is also possible to use mixtures of different esters or amides or esters combined with amides in any desired mixing ratio.

Polyether polyols or polyester polyols esterified or etherified with monobasic or polybasic carboxylic acids, preferably fatty acids, are also suitable. Suitable products are commercially available, for example as Loxiol^{®} EP 728 from Henkel KGaA.

Preferred ethers deriving from alcohols and ethylene oxide have the general formula:

RO(CH₂CH₂O)ₙH

in which R is an alkyl group having 6 to 40 carbon atoms and n is an integer of greater than or equal to 1. An especially preferred R is a saturated C₁₆ to C₁₈-fatty alcohol where n is about 50, which is commercially available as Lutensol^{®} AT 50 from BASF.

Further examples of such additives ("lubricants, glidants and mold release agents") are long-chain fatty acids (for example stearic acid or behenic acid), salts thereof (for example Ca or Zn stearate) or montan waxes (mixtures of straight-chain, saturated carboxylic acids having chain lengths of 28 to 32 carbon atoms) and Ca or Na montanate and low molecular weight polyethylene or polypropylene waxes.

The abovementioned additives of component B ("lubricants, glidants and mold release agents") are typically employed in amounts of up to 1 wt.-% based on the total mixture.

Examples of plasticizers as additives of component B are dioctyl phthalate, dibenzyl phthalate, butylbenzyl phthalate, hydrocarbon oils and N-(n-butyl)benzenesulfonamide.

The molding materials according to the invention may also comprise 0 to 2 wt.-% of fluorine-containing ethylene polymers. These are polymers of ethylene having a fluorine content of 55 to 76 wt.-%, preferably 70 to 76 wt.-%.

Examples thereof include polytetrafluoroethylene (PTFE), tetrafluoroethylene-hexafluoropropylene copolymers or tetrafluoroolefinic copolymers comprising smaller proportions (generally up to 50 wt.-%) of copolymerizable ethylenically unsaturated monomers. These are described, for example, by Schildknecht in "Vinyl and Related Polymers", Wiley-Verlag, 1952, pages 484 to 494, and by Wall in "Fluoropolymers" (Wiley Interscience, 1972).

These fluorine-containing ethylene polymers are homogeneously distributed in the molding materials and preferably have a particle size d50 (number average) in the range from 0.05 to *10 µ* m, in particular from 0.1 to 5 *µ* m. These small particle sizes are particularly preferably achievable through the use of aqueous dispersions of fluorine-containing ethylene polymers and the incorporation thereof into a polymer melt.

Further customary additives B include for example amounts of up to 40 wt.-%, preferably up to 15 wt.-%, of elastomeric polymers (often also referred to as impact modifiers, elastomers or rubbers).

Examples of impact modifiers include rubbers, which may have functional groups. Mixtures of two or more different impact-modifying rubbers may also be employed.

Rubbers that enhance the toughness of the molding materials generally comprise an elastomeric proportion having a glass transition temperature of less than -10 ° C, preferably of less than -30 ° C, and comprise at least one functional group capable of reacting with the polyamide. Suitable functional groups include, for example, carboxylic acid, carboxylic anhydride, carboxylic ester, carboxylic amide, carboxylic imide, amino, hydroxyl, epoxide, urethane or oxazoline groups, preferably carboxylic anhydride groups.

Suitable rubbers include core-shell graft rubbers. These are graft rubbers produced in emulsion, which are composed of at least one hard and one soft constituent. A hard constituent is typically a polymer having a glass transition temperature of at least 25 ° C, while a soft constituent is a polymer having a glass transition temperature of not higher than 0° C These products have a structure composed of a core and at least one shell, the structure being the result of the order in which the monomers are added. The soft constituents are generally derived from butadiene, isoprene, alkyl acrylates, alkyl methacrylates or siloxanes and optionally further comonomers. Suitable siloxane cores may be produced, for example, starting from cyclic oligomeric octamethyltetrasiloxane or tetravinyltetramethyltetrasiloxane. These may be reacted, for example, with gamma-mercaptopropylmethyldimethoxysilane in a ring-opening cationic polymerization, preferably in the presence of sulfonic acids, to form the soft siloxane cores. The siloxanes may also be crosslinked by, for example, conducting the polymerization reaction in the presence of silanes having hydrolyzable groups such as halogen or alkoxy groups such as tetraethoxysilane, methyltrimethoxysilane or phenyltrimethoxysilane. Suitable comonomers here include, for example, styrene, acrylonitrile and crosslinking or grafting monomers having more than one polymerizable double bond such as diallyl phthalate, divinylbenzene, butanediol diacrylate or triallyl (iso)cyanurate. The hard constituents are generally derived from styrene, alpha-methylstyrene and copolymers thereof, preferred comonomers being acrylonitrile, methacrylonitrile and methyl methacrylate.

Preferred core-shell graft rubbers comprise a soft core and a hard shell or a hard core, a first soft shell and at least one further hard shell. The incorporation of functional groups such as carbonyl, carboxylic acid, acid anhydride, acid amide, acid imide, carboxylic ester, amino, hydroxyl, epoxy, oxazoline, urethane, urea, lactam or halobenzyl groups is here preferably effected by the addition of suitably functionalized monomers during the polymerization of the last shell. Suitable functionalized monomers include, for example, maleic acid, maleic anhydride, mono- or diesters of maleic acid, tert-butyl (meth)acrylate, acrylic acid, glycidyl (meth)acrylate and vinyloxazoline. The proportion of monomers having functional groups is generally 0.1 to 25 wt.-%, preferably 0.25 to 15 wt.-%, based on the total weight of the core-shell graft rubber. The weight ratio of soft to hard constituents is generally 1:9 to 9:1, preferably 3:7 to 8:2.

Such rubbers are known per se and for example described in the publication EP 0 208 187. The incorporation of oxazine groups for functionalization may be effected, for example, according to EP 0 791606.

A further group of suitable impact modifiers are thermoplastic polyester elastomers. Polyester elastomers are segmented copolyether esters comprising long-chain segments, generally derived from poly(alkylene) ether glycols, and short-chain segments deriving from low molecular weight diols and dicarboxylic acids. Such products are known per se and described in the literature, for example in U.S. Pat. No. 3,651,014. Corresponding products are also commercially available under the names Hytrel^{™} (Du Pont), Arnitel^{™} (Akzo) and Pelprene^{™} (Toyobo Co. Ltd.).

It will be appreciated that it is also possible to use mixtures of different rubbers.

Further additives B may include polyesters different from component A-1 or polycarbonates.

### Process for producing the thermoplastic molding composition (M)

The thermoplastic molding composition (M) according to the invention may be produced by processes known per se by mixing the starting components (A-1), (A-2), (A-3), (A-4), and (A-5) and optionally component (B) in customary mixing apparatuses such as (twin-)screw extruders, Brabender mills or Banbury mills and subsequently extruded. After extrusion the extrudate may be cooled and comminuted. It is also possible to premix individual components and then add the remaining starting materials individually and/or likewise in admixture. Components (A-2), (A-3), (A-4), (A-5) and optionally (B) may be added in form of one or more master batches, preferably using a polymer compatible with component (A-1) as matrix. For example, master batches comprising 30 to 90 wt.-%, preferably 50 to 85 wt.-%, based on the total weight of the master batch, of a semi-aromatic polyester, and 10 to 70 wt.-%, preferably 15 to 50 wt.-%, based on the total weight of the master batch of at least one of component(s) (A-2), (A-3), (A-4), (A-5) and optionally (B), or mixtures of at least two of the aforementioned, may be used. The mixing temperatures are generally around 230 to 320 ° C. In particular, individual components can also be added as "hot feed" or directly into the feed section of the extruder. It is obvious to the skilled person that the thermoplastic polymer blend (A) may be obtained by the same methods without adding component (B). Accordingly, the thermoplastic molding composition (M) may be obtained by mixing the thermoplastic polymer blend (A) and optionally component (B).

### Use of the thermoplastic molding composition (M)

The thermoplastic molding composition (M) may be used for the preparation of molded articles and extrusion applications including films, coating films, sheets, profiles, fibers and bristles etc.. According to one embodiment, the thermoplastic molding composition (M) may be preferably used for the preparation of coating films, in particular films obtained by extrusion coating.

The thermoplastic molding composition (M) exhibits high melt stability and only slight neck-in during extrusion, which enables an extrusion coating process at high line speeds. It can therefore be advantageously used as coating material, e.g. in coating processes such as extrusion coating processes.

### Coated article (S)

In another aspect, the invention relates to a coated article (S), comprising:

| | |
|---|---|
| (S-1) | at least one substrate layer (S-1), and |
| (S-2) | at least one coating layer (S-2), |

wherein
the at least one coating layer (S-2) is coated on at least one surface of the at least one substrate layer (S-1), and wherein
the at least one coating layer (S-2) comprises or consists of a thermoplastic molding composition (M) according to the invention.

The substrate layer (S-1) may be of any known material. Typically, materials such as polymers, fiber materials such as paper-based materials, fabrics, and metal foils or combinations of these may be used. Preferred materials are selected from paper-based substrate materials, and in particular include paper, paperboard, cardboard, and corrugated board.

The thickness of the substrate layer (S-1) is generally not limited, i.e. the invention is not limited to coated articles (S) having a specific minimum or maximum thickness of the substrate layer (S-1).

The thickness of the coating layer (S-2) is generally not limited, i.e. the invention is not limited to coated articles (S) having a specific minimum or maximum thickness of the coating layer (S-2). According to one embodiment of the invention, the coating layer (S-2) may have a thickness of not more than 50 µm, for example a thickness in the range of from 1 µm to 30 µm, preferably in the range of from 5 µm to 25 µm. According to an alternative embodiment of the invention, the coating layer (S-2) may have a thickness of more than 50 µm. The thickness of the coating layer (S-2) may be calculated from the weight of the coated article (S), the density of the thermoplastic molding composition (M) and the weight of the substrate layer (S-1).

The thermoplastic molding composition (M) shows a high adhesion to various substrate materials used as substrate layer (S-1), in particular to paper-based substrate materials, and in particular include paper, paperboard, cardboard, and corrugated board. In view of this, it is not required to apply tie layers, glues, primers, etc. to the surface of the paper-based material prior to the application of the thermoplastic molding composition (M) to the surface of the substrate layer (S-1). Accordingly, in one embodiment, the coated article (S) is characterized in that the coating layer (S-2) is situated directly on the surface of the substrate layer (S-1), i.e. no additional material is situated between the surface of the substrate layer (S-1) and the coating layer (S-2).

### Process for the production of a coated article (S)

In a further aspect, the invention also relates to a process for the production of a coated article (S) according to the invention, wherein the process at least comprises the following process steps:
(i) providing of a substrate layer (S-1);
(ii) providing of a thermoplastic molding composition (M) according to the invention;
(iii) melting of the thermoplastic molding composition (M), and
(iv) applying of the molten thermoplastic molding composition (M) obtained in step (iii) to at least a part of at least one surface of the substrate layer (S-1) to obtain a coating layer (S-2) comprising or consisting of the thermoplastic molding composition (M).

The substrate layer (S-1) may be provided by any known process. Typical substrate layers, such as paper-based substrate materials are commercially available. For example, commercials available paper-based substrate materials include Magno Star papers (e.g. Magno Star 58 gsm) available from Sappi Ltd. or Cupforma papers (e.g. Cupforma Natura^{™} 195 gsm) available from Stora Enso Oyj.

The thermoplastic molding composition (M) may be provided from the components (A-1), (A-2), (A-3), (A-4) and (A-5) and optionally (B), for example by the process described herein above. The provision of the thermoplastic molding composition (M) may also be achieved by melt-mixing its constituents directly in the process step (iii). Melting of the thermoplastic molding composition (M) as a blend or of its constituents may by achieved by known processes, for example in customary mixing apparatuses such as (twin-)screw extruders, Brabender mills or Banbury mills and subsequently extruded. In order to obtain a substantially liquid melt, the thermoplastic molding composition (M) as a blend or of its constituents is brought to temperatures above the melting temperature of the thermoplastic molding composition (M), typically to temperature in the range of from 230 ° C to 320 ° C, preferably from 250 to 300 ° C. Preferably, a twin-screw extruder is used.

According to process step (iv), the molten thermoplastic molding composition (M) obtained in step (iii) is applied to at least a part of at least one surface of the substrate layer (S-1). Application may be effectuated by known coating processes, e.g. extrusion coating, dip coating, brush coating, roll coating, spray coating, spin coating, and flow coating. Preferably, an extrusion coating process is chosen.

Preferably, the molten thermoplastic molding composition (M) obtained in step (iii) is applied to at least a part of at least one surface of the substrate layer (S-1) by extrusion coating processes, e.g. by trespassing the molten thermoplastic molding composition (M) obtained in step (iii) through a slit die in proximity to the at least one surface of the substrate layer (S-1). Preferably, the substrate layer (S-1) is continuously conveyed along the slit die, in such way that the melt curtain is oriented tangential or perpendicular to the substrate layer (S-1). The substrate is typically conveyed at speeds of more than 0.1 m/min, often more than 1 m/min, for example more than 20 m/min or more than 50 m/min. The maximum possible conveying speed is not particularly limited by the thermoplastic molding composition (M) according to the invention. By adjusting the conveying speed, the amount of molten thermoplastic molding composition (M) applied to a certain surface area of the substrate layer (S-1) may be adjusted in order to obtain the desired thickness of the coating layer (S-2).

Preferably, the process for the production of a coated article (S) according to the invention comprises at least one further step (v), in which the coated article (S) obtained in process step (iv) is cooled to a temperature below the melting temperature of the thermoplastic molding composition (M), e.g. to temperatures below 200 ° C, preferably below 150 ° C, for example below 100 ° C. Rapid cooling of the coating layer (S-2) reduces the risk of crystal formation in the coating layer (S-2) thereby improving the properties thereof. Moreover, rapid cooling allows to rewind the coated substrate (S) directly after the coating process.

According to one embodiment of the process for the production of a coated article (S) according to the invention, the substrate layer (S-1) is a paper-based substrate material and the process comprises a further process step (pre-iv) wherein the paper-based substrate material is pre-treated before process step (iv), which is carried out by flame-treatment and/or corona-treatment of the at least one surface to which the coating layer (S-2) is applied. This process step (pre-iv) may be effectuated at any point after process step (i) and before process step (iv). Preferably, the process set (pre-iv) is effectuated in parallel to process step (iii) and directly before process step (iv), e.g. less than 30 seconds before process step (iv), in particular less than 10 seconds before process step (iv). This allows for a better adhesion of the thermoplastic molding composition (M) to the surface of the substrate layer (S-1). Preferably, process step (pre-iv) is carried out by a combination of flame-treatment and corona-treatment of the at least one surface to which the coating layer (S-2) is applied.

Preferably, the process for the production of a coated article (S) according to the invention does not comprise a process step in which an additional chemical compound or chemical composition is applied to the surface of the substrate layer (S-1) prior to the process step (iv) to improve the adhesion of the thermoplastic molding composition (M) thereto. In particular, no tie layers, glues, primers, etc., are applied to the surface of the substrate layer (S-1) prior to the process step (iv).

### Use of the coated article (S)

The obtained coated article (S) may be used for many applications, e.g. as packaging material (P), such as packaging material for solid, liquid and/or oily substances, in particular packaging material for food, packaging material for animal food, packaging for medical or pharmaceutical products, industrial packaging materials, or water-resistant packaging materials.

Further suitable applications include coated articles for construction materials such as pressboard, wood, chip-plates or fiberwood, or chemicals (concrete, plastics *etc*.).

### Packaging material (P)

In another aspect, the present invention therefore also relates to a packaging material (P) comprising or consisting of a coated article (S) according to the invention. The coated article (S) exhibits a good combination of properties such as a high moisture and oxygen barrier properties, combined with good grease and oil barrier properties and grease and oil resistance, and also has a good adhesion of the coating layer (S-2) to the substrate layer (S-1) even at low layer thicknesses of the coating layer (S-2), i.e. reduced consumption of the thermoplastic molding composition (M).

### Use of the packaging Material (P)

The packaging material (P) may be used as packaging material for liquid and/or oily substances, in particular packaging material for food, packaging material for animal food, packaging for medical or pharmaceutical products, industrial packaging materials, or water-resistant packaging materials.

The invention is further illustrated by the following examples and claims.

### Experimental Examples

Examples and comparative Examples were made using the following materials in the proportion given in Table 1:

| | |
|---|---|
| A-1 | Poly(butylene terephthalate) with a melt volume rate of 8 - 10 cm³/min (measured at 250 ° C under 2.16 kg load), available as Ultradur^{®} B6550 (BASF SE). |
| A-2 | Aqueous solution of polyacrylic acid (about 49 wt.-% dry content determined according to ISO 3251, 150 ° C, 2h) with an weight-average molecular weight of 5 kg/mol |
| | (determined by GPC), a viscosity of approximately 500 mPa·s (determined according to EN12092, Brookfield 25 ° C) and a K-value of approximately 25, determined according to ISO 1628-1, 1% in water), available as Sokalan^{®} PA 25 XS (BASF SE). |
| A-3 | Epoxy-containing styrene copolymer, available as Joncryl^{®} ADR 4400 (SK Functional Polymer). |
| A-4 | A random ethylene-methyl acrylate-glycidyl metacrylate (EMA-GMA) terpolymer, available as Lotader^{®} AX8900 (SK Functional Polymer). |
| A-5 | A metallocene polyethylene wax, grafted with maleic anhydride, available as Licocene^{®} PE MA4221 (Clariant AG). |
| B-1 | Epoxidized Linseed oil, available as Vikoflex^{®} 7190 (Arkema Group). |

### Substrates

Paper-based substrates selected between Magno Star 58 gsm (further referred to as Magno Star) purchased from Sappi, or Cupforma Natura^{™} 195 gsm (further referred to as Cupforma) purchased from Stora Enso.

Thermoplastic molding compositions were produced using a ZE-40 twin screw extruder with vacuum degassing, at an average throughput of 75 kg/h. A screw speed of 200 rpm was set and the melt temperature was maintained at 280 ° C. The thermoplastic molding compositions were obtained as pellets by a palletization process.

Melt volume-flow rate (MVR, 250 ° C/2.16 kg [cm³/10 min]) was determined according to ISO 1133-1. The values are reported in table 1.

**Table 1. Compositions of Examples and comparative Examples (amounts given in wt.-% of the constituents A-1 to A-5 and B-1 used for forming the compositions).**

| | Ref. 1 | Comp. Ex. 1 | Comp. Ex. 2 | Comp. Ex. 3 | Comp. Ex. 4 | Comp. Ex. 5 | Ex. 1 | Ex. 2 |
|---|---|---|---|---|---|---|---|---|
| A-1 | 98.74 | 97.74 | 96.24 | 93.74 | 93.99 | 94.40 | 93.90 | 93.40 |
| A-2 | --- | --- | --- | --- | --- | --- | 0.5 | 1.0 |
| A-3 | 0.35 | 0.35 | 0.35 | 0.35 | 0.35 | 0.35 | 0.35 | 0.35 |
| A-4 | | 1.0 | 2.5 | 5.0 | 5.0 | 5.0 | 5.0 | 5.0 |
| A-5 | 0.25 | 0.25 | 0.25 | 0.25 | --- | 0.25 | 0.25 | 0.25 |
| B-1 | 0.66 | 0.66 | 0.66 | 0.66 | 0.66 | --- | --- | --- |
| | | | | | | | | |
| MVR | 4.2 | 5.5 | 3.9 | 2.4 | 1.3 | 3.7 | 4.5 | 4.6 |

The extrusion coating experiments were conducted on a roll-to-roll extrusion coating machinery using two different substrates, i.e. paper (Magno Star) and cardboard (Cupforma). Employed substrates (paper or cardboard) were continuously fed and could be pre-treated with both a flame bar and/or corona discharge. Subsequently, the polymer melt was extruded onto the continuously conveyed substrate and after trespassing a chill-roll, the coated paper was rewound into a roll. The substrate can be conveyed at different speeds ranging from 80 m/min to 300 m/min. Extrusion of the polymer was done using a single screw extruder with a screw-diameter of 60 mm (length/diameter ratio = 30) through a heated 50 cm slit die at an melt temperature of *ca.* 300 ° C. The maximum conveying speed was determined for each thermoplastic molding composition in combination with the respective substrate. Maximum conveying speed was reached, when an instable coating occurred (unstable melt curtain, edge-waving, or defective coating observed). The maximum conveying speed in given in Tables 2 to 5 below in m/min and refers to the speed with which the substrate is conveyed along the extruder die.

To determine the adhesion of the coating to the substrate surface, each substrate was coated with the respective thermoplastic molding composition at four different conveying speeds of the substrate (100 m/min, 120 m/min, 200 m/min and 250 m/min). For assessing the adhesion between coating and substrate, the coating was peeled off the substrate and the result were classified by a trained person. The classification into 5 levels of adhesion is defined as follows:

| | |
|---|---|
| 1 = | no adhesion between coating and substrate, the coating is peeled off without damage to the paper. |
| 2 = | poor adhesion, a few paper-fibers are ripped out. |
| 3 = | poor adhesion, the detached polymer film tears less than 50% area of paper away. |
| 4 = | moderate adhesion, more than 50% the of peeled polymer film are still covered with detached substrate. |
| 5 = | perfect adhesion, cohesion failure of the coated substrate, 100% of the peeled polymer is covered with adhering paper. |

The results are summarized in Table 2 for the paper substrate (Magnostar) with corona pretreatment, in Table 3 for the for the paper substrate (Magnostar) with combined corona and flame pretreatment, in Table 4 for the cardboard substrate (Cupforma) with corona pretreatment, and in Table 5 for the for the cardboard substrate (Cupforma) with combined corona and flame pretreatment.

**Table. 2. Results for paper coating (Mangostar) with corona pre-treatment of the paper substrate.**

| | | Ref. 1 | Comp. Ex. 1 | Comp. Ex. 2 | Comp. Ex. 3 | Comp. Ex. 4 | Comp. Ex. 5 | Ex. 1 |
|---|---|---|---|---|---|---|---|---|
| max. conveying speed [m/min] | | 280 | >300 | >300 | 220 | 180 | 250 | >300 |
| Adhesion classification at conveying speed of | 100 m/min | 2 | 3 | 3 | 4.5 | 4.5 | 4.5 | 4.5 |
| | 120 m/min | 2 | 2 | 2 | 3 | 3 | 3 | 3 |
| | 200 m/min | 1 | 2 | 2 | 2 | --- | 2 | 2 |
| | 250 m/min | 1 | 1 | 1 | --- | --- | 1 | 1 |

As can be seen from the experimental data of Table 2, the compositions according to reference example Ref. 1 results in unsatisfactory adhesion and also allows only a limited maximum conveying speed. Comparison of Ref. 1 with Comp. Ex. 1, Comp. Ex. 2 and Comp. Ex. 3 demonstrates that the addition of component A-4 improves both the adhesion, as well as the maximum conveying speed. However, while higher amounts of component A-4 tend to result in better adhesion (Comp. Ex. 1 to 3), the maximum conveying speed drops at an amount of 5 wt.-% (Comp. Ex. 3). Comparison of Comp. Ex. 3 and Comp. Ex. 4 shows that in the presence of component A-5, the maximum conveying speed is improved. Thus, component A-5 is mandatory for achieving high line-speeds. Comparison of comp. Ex. 5 and inventive Example 1 shows that with the thermoplastic molding composition according to the invention, best results are achieved with respect to the maximum possible conveying speed as well as with respect to the adhesion of the coating layer to the substrate material. Component A-2 is able to increase adhesion and line-speed, and is able to compensate for the loss of line-speed caused by the addition of high amounts of A-4.

**Table. 3. Results for paper coating (Mangostar) with combined corona and flame pre-treatment of the paper substrate.**

| | | Comp. Ex. 1 | Comp. Ex. 2 | Comp. Ex. 3 | Comp. Ex. 4 | Comp. Ex. 5 | Ex. 1 |
|---|---|---|---|---|---|---|---|
| max. conveying speed [m/min] | | >300 | >300 | 220 | 180 | 250 | >300 |
| Adhesion classification at conveying speed of | 100 m/min | 5 | 5 | 5 | 4.5 | 5 | 5 |
| | 120 m/min | 4 | 4 | 4.5 | 4 | 4.5 | 4.5 |
| | 200 m/min | 1 | 1 | 1 | --- | 1 | 2 |
| | 250 m/min | 1 | 1 | --- | --- | 1 | 2 |

The experimental data provided in Table 3 confirm the observations made in Table 2 regarding the maximum possible conveying speed as well as with respect to the adhesion of the coating layer to the substrate material. Moreover, it can be seen that the surface adhesion is further improved if the paper substrate material is pre-treated by a combination of corona and flame pre-treatment by comparing the results of Table 3 with the results of Table 2.

**Table. 4. Results for cardboard coating (Cupforma) with corona pre-treatment of the paper substrate.**

| | | Comp. Ex. 1 | Comp. Ex. 2 | Comp. Ex. 3 | Ex. 1 | Ex. 2 |
|---|---|---|---|---|---|---|
| max. conveying speed [m/min] | | >300 | >300 | 230 | >300 | >300 |
| Adhesion classification at conveying speed of | 100 m/min | 5 | 5 | 5 | 5 | 5 |
| | 120 m/min | 4 | 5 | 5 | 5 | 5 |
| | 200 m/min | 3 | 3 | 5 | 5 | 5 |
| | 250 m/min | 2 | 2 | 2 | 3 | 4 |

The experimental data provided in Table 4 confirm the observations made in Table 2 regarding the maximum possible conveying speed as well as with respect to the adhesion of the coating layer to the substrate material. Moreover, it can be seen that the surface adhesion is better for cardboard substrate materials compared to paper substrate materials by comparing the results of Table 4 with the results of Table 2. Higher concentrations of component A-2 further increase the adhesion (*cf.* comparison between Ex. 1 and Ex. 2).

**Table. 5. Results for cardboard coating (Cupforma) with combined corona and flame pre-treatment of the paper substrate.**

| | | Comp. Ex. 1 | Comp. Ex. 2 | Comp. Ex. 3 | Ex. 1 | Ex. 2 |
|---|---|---|---|---|---|---|
| max. conveying speed [m/min] | | >300 | >300 | 250 | >300 | >300 |
| Adhesion classification at conveying speed of | 100 m/min | 5 | 5 | 5 | 5 | 5 |
| | 120 m/min | 5 | 5 | 5 | 5 | 5 |
| | 200 m/min | 3 | 3 | 3 | 4 | 4.5 |
| | 250 m/min | 3 | 3 | 3 | 4.5 | 4.5 |

The experimental data provided in Table 5 further confirm the previous observations made in Table 2 and Table 4 regarding the maximum possible conveying speed as well as with respect to the adhesion of the coating layer to the substrate material. Moreover, it can be seen that the surface adhesion is further improved if the paper substrate material is pre-treated by a combination of corona and flame pre-treatment by comparing the results of Table 5 with the results of Table 4.

In summary, component A-4 is required for a superior adhesion, however at higher concentrations, with a trade-off of maximum achievable line-speeds. Component A-2 can compensate for component A-4 and increases the adhesion further. Component A-5 is required for good processability.

## Claims

1. Thermoplastic molding composition (M) comprising:
| | | |
|---|---|---|
| (A) 30 to 100 wt.-% of at least one thermoplastic polymer blend (A) comprising or consisting of: | | |
| | (A-1) 81.5 to 99.39 wt.-% of at least one semi-aromatic polyester (A-1); | |
| | (A-2) 0.01 to 2 wt.-% of at least one acrylic acid polymer (A-2) composed of: | |
| | | (a-2a) 70 to 100 wt.-%, based on (A-2), of acrylic acid (a-2a), and |
| | | (a-2b) 0 to 30 wt.-%, based on (A-2), of at least one other ethylenically unsaturated monomer (a-2b) copolymerizable with acrylic acid, selected from the group of the mono-ethylenically unsaturated carboxylic acids; |
| | (A-3) 0.05 to 5 wt.-% of at least one epoxy-containing vinylaromatic copolymer (A-3); | |
| | (A-4) 0.5 to 10 wt.-% of at least one epoxy-containing olefinic copolymer (A-4); | |
| | (A-5) 0.05 to 1.5 wt.-% of at least one polyolefin wax (A-5) prepared by means of metallocene catalysts, where the polyolefin wax is a homopolymer of ethylene, a copolymer of ethylene with one or more 1-olefins which may be linear or branched, substituted or unsubstituted and having 3-18 carbon atoms, or a homopolymer of propylene, | |
| | wherein the polyolefin wax (A-5) is polar modified by reacting the polyolefin wax with an *α* ,*β* -unsaturated carboxylic acid or a derivative thereof; | |
| | wherein the sum of the proportions of components (A-1), (A-2), (A-3), (A-4) and (A-5) add up to 100 wt.-%; and | |
| (B) 0 to 70 wt.-% of one or more further additives and processing aids (B); | | |
wherein the sum of the proportions of components (A) and (B) add up to 100 wt.-%.

2. Thermoplastic molding composition (M) according to claim 1, wherein the at least one acrylic acid polymer (A-2) is composed of
| | |
|---|---|
| (a-2a) | 85 to 100 wt.-%, based on (A-2), of acrylic acid (a-2a), and |
| (a-2b) | 0 to 15 wt.-%, based on (A-2), of at least one other ethylenically unsaturated monomer (a-2b) copolymerizable with acrylic acid, selected from the group of the mono-ethylenically unsaturated carboxylic acids. |

3. Thermoplastic molding composition (M) according to claim 1 or 2, wherein the at least one acrylic acid polymer (A-2) has a weight average molecular weight M_{W} in the range of from 1,000 to 12,000 g/mol, wherein the molecular weights of the acrylic acid polymer (A-2) are determined by gel permeation chromatography (GPC) on aqueous solutions of polymers buffered to pH 7 using hydroxyethyl methacrylate copolymer networks as stationary phase and sodium polyacrylate standards.

4. Thermoplastic molding composition (M) according to any of claims 1 to 3, wherein the thermoplastic molding composition (M) comprises 0.05 to 1.5 wt.-% of the at least one acrylic acid polymer (A-2) and/or, wherein the thermoplastic molding composition (M) comprises 0.05 to 2.5 wt.-% of at least one epoxy-containing vinylaromatic copolymer (A-3) selected from poly(styrene-glycidylether-methyl methacrylates).

5. Thermoplastic molding composition (M) according to any of claims 1 to 4, wherein the least one epoxy-containing olefinic copolymer (A-4) is selected from one or more copolymer(s) composed of:
| | |
|---|---|
| (a-4a) | 50 to 94.8 wt.-% of at least one *α* -olefin with 2-8 carbon atoms; |
| (a-4b) | 5 to 40 wt.-% of a C₁-C₁₂ alkyl ester of acrylic acid or methacrylic acid or mixtures of such esters; |
| (a-4c) | 0.1 to 20 wt.-% of ethylenic unsaturated mono- or dicarboxylic acid or a functional derivative of such an acid; and |
| (a-4d) | 0.1 to 20 wt.-% of a monomer containing epoxy groups, |
wherein the sum of the proportions of constituents (a-4a), (a-4b), (a-4c), and (a-4d) add up to 100 wt.-%.

6. Thermoplastic molding composition (M) according to any of claims 1 to 4, wherein the at least one thermoplastic polymer blend (A) comprises or consists of:
| | |
|---|---|
| (A-1) | 87.5 to 99.33 wt.-% of at least one semi-aromatic polyester (A-1); |
| (A-2) | 0.05 to 1.5 wt.-% of the at least one acrylic acid polymer (A-2); |
| (A-3) | 0.05 to 2.5 wt.-% of the at least one epoxy-containing vinylaromatic copolymer (A-3); |
| (A-4) | 0.5 to 7.5 wt.-% of the at least one epoxy-containing olefinic copolymer (A-4); |
| (A-5) | 0.07 to 1 wt.-% of the at least one polyolefin wax (A-5). |

7. Thermoplastic molding composition (M) according to any of claims 1 to 6, wherein the thermoplastic molding composition (M) comprises 0 to 5 wt.-% of an epoxidized oil (B-1) or oil mixture in which the at least partly unsaturated fatty acids in the underlying fatty acid esters of the oil or oil mixture contain 12 to 22 carbon atoms;

8. Process for producing a thermoplastic molding composition (M) according to any of claims 1 to 7, wherein the process comprises at least the step of melt-mixing components (A-1), (A-2), (A-3), (A-4), (A-5) and optionally component(s) (B).

9. Use of a thermoplastic molding composition (M) according to any of claims 1 to 7 as coating material.

10. Coated article (S), comprising:
| | |
|---|---|
| (S-1) | at least one substrate layer (S-1), and |
| (S-2) | at least one coating layer (S-2), |
wherein
the at least one coating layer (S-2) is coated on at least one surface of the at least one substrate layer (S-1), and wherein
the at least one coating layer (S-2) comprises or consists of a thermoplastic molding composition (M) according to any of claims 1 to 7.

11. Coated article (S) according to claim 10, wherein the substrate layer (S-1) comprises or consists or a fiber substrate, preferably selected from paper-based substrate materials.

12. Process for the production of a coated article (S) according to claim 10 or 11, wherein the process at least comprises the following process steps:
(i) providing of a substrate layer (S-1);
(ii) providing of a thermoplastic molding composition (M) according to any of claims 1 to 8;
(iii) melting of the thermoplastic molding composition (M), and
(iv) coating of the molten thermoplastic molding composition (M) on at least one surface of the substrate layer (S-1) to obtain a coating layer (S-2) comprising or consisting of the thermoplastic molding composition (M).

13. Process for the production of a coated article (S) according to claim 12, wherein the substrate layer (S-1) is a paper-based substrate material and the process comprises the further process step (pre-iv) wherein the paper-based substrate material is pre-treated before process step (iv) is carried out by flame-treatment or corona-treatment of the at least one surface to which the coating layer (S-2).

14. Use of a coated article (S) according to claim 10 or 11 as packaging material (P) or construction material.

15. Packaging material (P) comprising or consisting of a coated article (S) according to claim 10 or 11.

## Patentansprüche

1. Thermoplastische Formzusammensetzung (M) umfasst:
*(A)* 30 bis 100 Wt.-% von mindestens einer thermoplastischen Polymermischung (A), bestehend aus oder bestehend aus:
(A-1) 81,5 bis 99,39 Gew.-% von mindestens einem semiaromatischen Polyester (A-1); (A-2) 0,01 bis 2 Wt.-% von mindestens einem Acrylsäurepolymer (A-2) von:
(A-2A) 70 bis 100 Wt.-%, basierend auf (A-2), Acrylsäure (A-2a) und (A-2b) 0 bis 30 Wt.-%, basierend auf (A-2) von mindestens einem anderen ethylenisch ungesättigten Monomer
(A-2b), das kopolymerisierbar ist mit Acrylsäure, ausgewählt aus der Gruppe der monoethylenisch ungesättigten Carbonsäuren;
(A-3) 0,05 bis 5 Wt.-% von mindestens einem epoxidhaltigen vinylaromatischen Copolymer (A-3);
(A-4) 0,5 bis 10 Gewichtsprozent von mindestens einem epoxidhaltigen olefinen Copolymer (A-4);
(A-5) 0,05 bis 1,5 Wt.-% von mindestens einem Polyolefinwachs (A-5), hergestellt mit Metallocän-Katalysatoren, wobei das Polyolefinwachs ein Homopolymer aus Ethylen ist, ein Kopolymer aus Ethylen mit einem oder mehreren 1-Olefinen, das linear oder verzweigt, substituiert oder unsubstituiert und 3-18 Kohlenstoffatome besitzt, oder ein Propylenhomopolymer, wobei das Polyolefinwachs (A-5) polar modifiziert wird, indem das Polyolefinwachs mit einer a, /3-ungesättigten Carbonsäure oder einem Derivat davon reagiert;
wobei die Summe der Anteile der Komponenten (A-1), (A-2), (A-3), (A-4) und (A-5) 100 Wt.-% ergibt; und
*(B)* 0 bis 70 Wt.-% eines oder mehrerer weiterer Zusatzstoffe und Verarbeitungshilfen (B); wobei die Summe der Anteile der Komponenten (A) und (B) zu 100 wt summiert. %.

2. Thermoplastische Formzusammensetzung (M) gemäß Anspruch 1, bei der mindestens ein Acrylsäurepolymer (A-2) aus besteht.
(a-2a) 85 bis 100 Gewichtsgehalt, basierend auf (A-2), Acrylsäure (a-2a), und
(a-2b) 0 bis 15 wt.-%, basierend auf (A-2) von mindestens einem anderen ethylenisch ungesättigten Monomer (a-2b), das mit Acrylsäure kopolymerisierbar ist, ausgewählt aus der Gruppe der monoethylenhaltig ungesättigten Carbonsäuren.

3. Thermoplastische Formzusammensetzung (M) gemäß Anspruch 1 oder 2, wobei mindestens ein Acrylsäurepolymer (A-2) ein durchschnittliches Molekulargewicht Mw im Bereich von 1.000 bis 12.000 g/mol hat, wobei die Molekulargewichte des Acrylsäurepolymers (A-2) mittels Gelpermeationschromatographie (GPC) auf wässrigen Lösungen von Polymeren bestimmt werden, die mit Hydroxyethyl auf pH 7 gepuffert sind Methacrylat-Copolymernetzwerke als stationäre Phase und Natriumpolyacrylat-Standards.

4. Thermoplastische Formzusammensetzung (M) gemäß einem der Ansprüche 1 bis 3, wobei die thermoplastische Formzusammensetzung (M) 0,05 bis 1,5 Wt.-% des mindestens einzigen Acrylsäurepolymers (A-2) ausmacht und/oder wobei die thermoplastische Formzusammensetzung (M) 0,05 bis 2,5 Wt.-% von mindestens einem epoxidhaltigen vinylaromatischen Kopolymer (A-3) aus Poly(Styrol-Glycidylether-Methylmethacrylaten) besteht.

5. Thermoplastische Gusszusammensetzung (M) gemäß einem der Ansprüche 1 bis 4, bei dem mindestens ein epoxidhaltiges olefines Copolymer (A-4) aus einem oder mehreren Copolymeren ausgewählt wird, die aus folgenden Zutaten bestehen:
| | |
|---|---|
| (A-4a) | 50 bis 94,8 Wt.-% von mindestens einem A-Olefin mit 2-8 Kohlenstoffatomen; |
| (a-4b) | 5 bis 40 Wt.-% eines C 1-C₁₂ Alkylesters aus Acrylsäure oder Methacrylsäure oder Mischungen solcher Ester; |
| (A-4C) | 0,1 bis 20 Wt.-% ethylenhaltiger ungesättigter Mono- oder Dicarboxylsäure oder eines funktionellen Derivats einer solchen Säure; und |
| (a-4d) | 0,1 bis 20 Wt.-% eines Monomers, das Epoxidgruppen enthält, |
wobei die Summe der Anteile der Bestandteile (a-4a), (a-4b), (a-4c) und (a-4d) 100 Wt.-% ergibt.

6. Thermoplastische Formzusammensetzung (M) gemäß einer der Ansprüche 1 bis 4, wobei mindestens eine thermoplastische Polymermischung (A) besteht oder besteht aus:
| | |
|---|---|
| (A-1) | 87,5 bis 99,33 Gew.-% von mindestens einem halbaromatischen Polyester (A-1); (A-2) 0,05 bis 1,5 Wt.-% des mindestens einzigen Acrylsäurepolymers (A-2); |
| (A-3) | 0,05 bis 2,5 Wt.-% des mindestens epoxidhaltigen vinylaromatischen Copolymers (A-3); |
| (A-4) | 0,5 bis 7,5 Wt.-% des mindestens epoxidhaltigen olefinen Kopolymers (A-4); |
| (A-5) | 0,07 bis 1 Gewicht von mindestens einem Polyolefinwachs (A-5). |

7. Thermoplastische Formzusammensetzung (M) gemäß einer der Ansprüche 1 bis 6, wobei die thermoplastische Formzusammensetzung (M) 0 bis 5 Wt.-% eines epoxidierten Öls (B-1) oder einer Ölmischung umfasst, in der die mindestens teilweise ungesättigten Fettsäuren in den zugrunde liegenden Fettsäureestern des Öls oder des Ölgemisches 12 bis 22 Kohlenstoffatome enthalten;

8. Verfahren zur Herstellung einer thermoplastischen Formzusammensetzung (M) gemäß einem der Ansprüche 1 bis 7, wobei der Prozess mindestens den Schritt der schmelzmischenden Komponenten (A-1), (A-2), (A-3), (A-4), (A-5) und optional Komponenten (B) umfasst.

9. Verwendung einer thermoplastischen Formzusammensetzung (M) gemäß einer der Ansprüche 1 bis 7 als Beschichtungsmaterial.

10. Beschichteter Artikel (S), bestehend:
(S-1) mindestens eine Substratschicht (S-1)
und (S-2) mindestens eine
Beschichtungsschicht (S-2), wobei
mindestens eine Beschichtungsschicht (S-2) wird auf mindestens einer Oberfläche der mindestens einzigen Substratschicht (S-1) beschichtet, wobei die mindestens eine Beschichtungsschicht (S-2) besteht gemäß einer der Ansprüche 1 bis 7 aus einer thermoplastischen Formzusammensetzung (M).

11. Beschichteter Artikel (S) gemäß Anspruch 10, wobei die Substratschicht (S-1) aus einem Fasersubstrat besteht, vorzugsweise aus papierbasierten Substratmaterialien ausgewählt.

12. Verfahren zur Herstellung eines beschichteten Gegenstands (S) gemäß Anspruch 10 oder 11, wobei der Prozess mindestens die folgenden Prozessschritte umfasst:
(i) Bereitstellung einer Substratschicht (S-1);
(ii) Bereitstellung einer thermoplastischen Formzusammensetzung (M) gemäß einem der Ansprüche 1 bis 8;
(iii) das Schmelzen der thermoplastischen Formzusammensetzung (M), und
(iv) Beschichtung der geschmolzenen thermoplastischen Formzusammensetzung (M) auf mindestens einer Oberfläche der Substratschicht (S-1), um eine Beschichtungsschicht (S-2) zu erhalten, die die thermoplastische Formzusammensetzung (M) besteht oder daraus besteht.

13. Verfahren zur Herstellung eines beschichteten Gegenstands (S) gemäß Anspruch 12, wobei die Substratschicht (S-1) ein papierbasiertes Substratmaterial ist und der Prozess den weiteren Prozessschritt (pre-iv) umfasst, bei dem das papierbasierte Substratmaterial vorbehandelt wird, bevor der Prozessschritt (iv) durch Flammenbehandlung oder Koronabehandlung der mindestens einmaligen Oberfläche durchgeführt wird, auf der die Beschichtungsschicht (S-2) liegt.

14. Verwendung eines beschichteten Gegenstands (S) gemäß Anspruch 10 oder 11 als Verpackungsmaterial (P) oder Baumaterial.

15. Verpackungsmaterial (P) besteht aus oder besteht aus einem beschichteten Gegenstand (S) gemäß Anspruch 10 oder 11.

## Revendications

1. Composition du moulage thermoplastique (M) comprenant :
*(A)* 30 à 100 % en poids d'au moins un mélange polymère thermoplastique (A) composé ou composé de :
(A-1) 81,5 à 99,39 % en poids d'au moins un polyester semi-aromatique (A-1) ; (A-2) 0,01 à 2 % en poids d'au moins un polymère à acide acrylique (A-2) composé de :
(A-2A) 70 à 100 % en poids, basé sur (A-2) d'acide acrylique (a-2a) et (a-2b) 0 à 30 % en poids, basé sur (A-2), d'au moins un autre monomère éthyléniquement insaturé (A-2b) copolymérisable avec de l'acide acrylique, sélectionné dans le groupe des acides carboxyliques mono-éthyléniquement insaturés ;
(A-3) 0,05 à 5 % en poids d'au moins un copolymère vinylaromatique contenant de l'époxy (A-3) ;
(A-4) 0,5 à 10 % en poids d'au moins un copolymère oléfinique contenant de l'époxy (A-4) ;
(A-5) 0,05 à 1,5 % en poids d'au moins une cire de polyoléfine (A-5) préparée au moyen de catalyseurs métallocènes, où la cire de polyoléfine est un homopolymère d'éthylène, un copolymère d'éthylène avec une ou plusieurs 1-oléfines pouvant être linéaires ou ramifiées, substituées ou non et contenant 3 à 18 atomes de carbone, ou un homopolymère de propylène,
où la cire de polyoléfine (A-5) est modifiée polairement en faisant réagir la cire de polyoléfine avec un acide carboxylique insaturé A, /3 ou un de ses dérivés ;
où la somme des proportions des composantes (A-1), (A-2), (A-3), (A-4) et (A-5) s'additionne à 100 % ; et
*(B)* 0 à 70 % en poids d'un ou plusieurs additifs et aides de transformation supplémentaires (B) ; où la somme des proportions des composantes (A) et (B) s'additionne à 100 wt.
%.

2. Composition du moulage thermoplastique (M) selon la revendication 1, où au moins un polymère acide acrylique (A-2) est composé de
| | |
|---|---|
| (a-2a) | 85 à 100 % en poids basé sur (A-2) d'acide acrylique (a-2a), et |
| (a-2b) | 0 à 15 % en poids, basé sur (A-2), d'au moins un autre monomère éthyléniquement insaturé (a-2b) copolymérisable avec de l'acide acrylique, sélectionné parmi le groupe des acides carboxyliques mono-éthyléniquement insaturés. |

3. Composition du moulage thermoplastique (M) selon la revendication 1 ou 2, où au moins un polymère à acide acrylique (A-2) a un poids moléculaire moyen Mw dans la fourchette de 1 000 à 12 000 g/mol, où les poids moléculaires du polymère à base d'acide acrylique (A-2) sont déterminés par chromatographie par perméation en gel (GPC) sur des solutions aqueuses de polymères tamponnées à pH 7 à l'aide d'hydroxyéthyle
réseaux de copolymères de méthacrylate en phase stationnaire et étalons de polyacrylate de sodium.

4. Composition du moulage thermoplastique (M) selon l'une des revendications 1 à 3, où la composition du moulage thermoplastique (M) représente 0,05 à 1,5 % en poids d'au moins un polymère acrylique (A-2) et/ou, où la composition de moulage thermoplastique (M) représente 0,05 à 2,5 % en poids d'au moins un copolymère vinylo-aromatique contenant de l'époxy (A-3) sélectionné à partir de poly(styrène-glycidyléthéra-méthacrylates).

5. Composition du moulage thermoplastique (M) selon l'une des revendications 1 à 4, où le moins un copolymère oléfinique contenant de l'époxy (A-4) est sélectionné parmi un ou plusieurs copolymères composés de :
| | |
|---|---|
| (A-4A) | 50 à 94,8 % en poids d'au moins une oléfine A avec 2 à 8 atomes de carbone ; |
| (a-4b) | 5 à 40 % d'un ester alkyl C 1-C₁₂ d'acide acrylique ou méthacrylique ou de mélanges de ces esters ; |
| (A-4C) | 0,1 à 20 % en poids d'acide mono- ou dicarboxylique insaturé éthylénique ou d'un dérivé fonctionnel d'un tel acide ; et |
| (A-4D) | 0,1 à 20 % en poids d'un monomère contenant des groupes époxy, |
où la somme des proportions des constituants (a-4a), (a-4b), (a-4c) et (a-4d) s'additionne à 100 en poids.

6. Composition du moulage thermoplastique (M) selon l'une des revendications 1 à 4, où au moins un mélange de polymères thermoplastiques (A) comprend ou se compose de :
| | |
|---|---|
| (A-1) | 87,5 à 99,33 % de poids d'au moins un polyester semi-aromatique (A-1) ; (A-2) 0,05 à 1,5 % en poids d'au moins un polymère à acide acrylique (A-2) ; |
| (A-3) | 0,05 à 2,5 % en poids d'au moins un copolymère vinylaromatique contenant de l'époxy (A-3) ; |
| (A-4) | 0,5 à 7,5 % en poids d'au moins un copolymère oléfini contenant de l'époxy (A-4) ; |
| (A-5) | 0,07 à 1 % de la cire polyoléfine (A-5) d'au moins une cire polyoléfine. |

7. Composition du moulage thermoplastique (M) selon l'une des revendications 1 à 6, où la composition du moulage thermoplastique (M) comprend 0 à 5 % en poids d'un mélange d'huile époxydée (B-1) ou d'huile dans lequel les acides gras au moins partiellement insaturés dans les esters sous-jacents du mélange d'huile ou d'huile contiennent 12 à 22 atomes de carbone ;

8. Procédé pour produire une composition de moulage thermoplastique (M) selon l'une des revendications 1 à 7, dans lequel le procédé comprend au moins l'étape de mélange par fusion des composants (A-1), (A-2), (A-3), (A-4), (A-5) et éventuellement des composants (B).

9. Utilisation d'une composition de moulage thermoplastique (M) selon l'une des revendications 1 à 7 comme matériau de revêtement.

10. Article enrobé (S), comprenant :
(S-1) au moins une couche de substrat (S-1), et (S-2) au moins une couche de revêtement (S-2), dans laquelle
au moins une couche de revêtement (S-2) est recouverte d'au moins une surface d'au moins une couche de substrat (S-1), et où
au moins une couche de revêtement (S-2) comprend ou consiste en une composition de moulage thermoplastique (M) selon l'une des revendications 1 à 7.

11. Article enduit (S) selon l'affirmation 10, où la couche de substrat (S-1) comprend ou consiste en un substrat fibreux, de préférence sélectionné à partir de matériaux de support à base de papier.

12. Procédé de production d'un article enduit (S) selon la revendication 10 ou 11, dans lequel le procédé comprend au moins les étapes suivantes :
(i) la fourniture d'une couche de substrat (S-1) ;
(ii) la fourniture d'une composition de moulage thermoplastique (M) selon l'une des revendications 1 à 8 ;
(iii) fusion de la composition de moulage thermoplastique (M), et
(iv) revêtement de la composition de moulage thermoplastique en fusion (M) sur au moins une surface de la couche de substrat (S-1) pour obtenir une couche de revêtement (S-2) comprenant ou constituant la composition de moulage thermoplastique (M).

13. Procédé de production d'un article revêtu (S) selon la revendication 12, où la couche de substrat (S-1) est un matériau substrat à base de papier et le procédé comprend l'étape ultérieure (pré-iv) où le matériau du substrat à base de papier est prétraité avant l'étape (iv) du procédé par traitement par flamme ou corona de la surface à laquelle la couche de revêtement (S-2) est effectuée.

14. Utilisation d'un article enduit (S) selon la revendication 10 ou 11 comme matériau d'emballage (P) ou matériau de construction.

15. Matériau d'emballage (P) composé ou constitué d'un article enduit (S) selon la revendication 10 ou 11.
